Europäisches Patentamt

European Patent Office

Office européen des brevets

(19)

(11) Veröffentlichungsnummer: **0 396 126**

**A2**

## (12) EUROPÄISCHE PATENTANMELDUNG

(21) Anmeldenummer: **90108341.0**

(22) Anmeldetag: **03.05.90**

(51) Int. Cl.5: **H02M 3/28**

(30) Priorität: **03.05.89 US 346655**

(43) Veröffentlichungstag der Anmeldung:
**07.11.90 Patentblatt 90/45**

(84) Benannte Vertragsstaaten:
**AT BE CH DE DK ES FR GB GR IT LI LU NL SE**

(71) Anmelder: **THE LINCOLN ELECTRIC COMPANY**
**22801 St. Clair Avenue**
**Cleveland, Ohio 44117-1199(US)**

(72) Erfinder: **Bilczo, Dale L.**
**3744 River Lane**
**Rocky River, Ohio 44116(US)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**D-5000 Köln 1(DE)**

(54) **Vorrichtung zur Stromversorgung.**

(57) Es wird eine Verbesserung in einer Wandlern-Energieversorgung (I) mit einem Ausgangstransformator (T) mit einem hochpermeablen magnetischen Kern (D), Eingangswicklungsvorrichtungen zur Anwendung von Eingangsstrompulsen auf den Kern vorgestellt; eine erste Ausgangswicklung (42) ist um den Kern (D) gewickelt; und eine zweite Ausgangswicklung (52) ist um den Kern (D) gewickelt. Die Energieversorgung beinhaltet ferner erste und zweite Ausgangsterminals (X, Y) und Ausgangsschaltkreiseinrichtungen (40,50) zur Verschaltung der einzelnen Ausgangswicklungen zu den Terminals in einer Art und Weise, daß entgegengesetzte Polarität der Ausgangsstrompulse in den Ausgangswicklungen durch die Eingangsstrompulse über die Terminals (X, Y) in einer vorgewählten ersten Polarität induziert. Die Verbesserung dieser Energieversorgung beinhaltet die Bildung des Ausgangstransformators (T) mit den beiden Ausgangswicklungen (42, 52) mit im wesentlichen der gleichen Wicklungszahl, die in einer vorgewählten Richtung gewickelt sind, so daß der Stromfluß, verursacht durch den Freilauf von einem Ausgangsinduktor (60), gleichzeitig durch die beiden Ausgangswicklungen in einer Richtung fließt, um entgegengesetzte Polarität des magnetischen Flusses in dem Transformatorkern (T) zu bewirken. Es sind Einrichtungen Vorgesehen, für die Anbringung der zwei Ausgangswicklungen (42, 52) des Transformators (T) eine neben der anderen auf dem Kern (D) in

einem dichten Überlappungsverhältnis mit einem Kopplungskoeffizienten > 0,950 und vorzugsweise > 0,980. Die besten Resultate wurden mit dem Koeffizienten > 0,990 erhalten.

FIG. 1

# Vorrichtung zur Stromversorgung

Die Erfindung betrifft eine Vorrichtung zur Stromversorgung, wie sie in erster Linie für Lichtbogenschweißen benötigt wird und hat mehr im einzelnen einen verbesserten Ausgangsschaltkreis für einen Wechselrichter zum Gegenstand, der beim elektrischen Lichtbogenschweißen verwendet wird.

Es ist in der Schweißtechnik üblich, Wechselrichter zu verwenden, die im allgemeinen die Form eines mitschwingenden Wandlers mit Halbbrücke oder Vollbrücke haben, bei denen die Gatterschaltkreise durch Silicium-Thyristoren, sogenannte SCRs gesteuert werden. Die Nachteile dieses Wandlertyps werden durch einen Wechselrichter zur Stromversorgung überwunden, in der die Schaltvorrichtungen wahlweise mit Hilfe einer an Steuerleitungen angeschlossenen Schaltlogik leitend oder nichtleitend gemacht werden. Einer der effizienter ausgelegten Wechselrichter, welche die Vorteile eines gesteuerten Schaltkonzeptes ausnutzen, verwendet einen Ausgangstransformator mit zwei separaten Eingangs- oder Primärwicklungen. Durch diese Primärwicklungen wird eine Folge von gesteuerten Gleichstrompulsen zugeführt, dessen erster Puls in einer vorher ausgewählten Richtung auf die erste Primärwindung geschaltet wird, um einen entsprechenden Strom in einer ausgewählten Polarität in eine erste Ausgangswindung des Transformators fließen zu lassen, der der ersten Primärwindung zugeordnet ist. Hierdurch erzeugt ein Gleichstrompuls, der durch die erste Primärwindung durchgelassen oder durchgeschaltet wird, einen entsprechenden Ausgangsstrompuls in einer ersten Ausgangswicklung. An diese Ausgangsklemmen sind Schweißelektroden mit einer Drosselspule hoher Impedanz mit den Elektroden in Reihe geschaltet. Nachdem dieser erste Impuls in der ersten Primärwicklung erzeugt wurde und hierdurch einen Ausgangspuls in der ersten Ausgangswicklung des Transformators erzeugt hat, erlauben der Ausgangstransformator und der Lastfreilauf der in der Drossel gespeicherten Energie durch die Drossel und durch die Elektroden zu fließen. In der Vergangenheit wurde dieser Freilaufstrom durch eine Diode geleitet und zirkulierte durch einen Schaltkreis, in dem die Drossel angeordnet war.

In einigen Fällen erzeugt ein einzelner Primärpuls in einer sekundären Ausgangswicklung des Transformators einen Sekundärpuls. Diese Art des Stromversorgungs-Wechselrichters verwendet jedoch im allgemeinen eine abgeleitete zweite Primärwicklung, die der zweiten Ausgangswicklung des Transformators zugeordnet ist, um einen zweiten Ausgangsstrompuls zu erzeugen, der eine entgegengesetzte Polarität hat als der erste Ausgangspuls. Dieser zweite Puls wird von der zweiten Primärwicklung in die zweite Ausgangswicklung induziert. Dieser Ausgangspuls mit entgegengesetzt gerichteter Polarität wird durch eine Einwegvorrichtung zu den Ausgangsklemmen geführt, um in den Elektroden einen Ausgangsstrompuls in der gleichen Richtung zu erzeugen, die der erste von der ersten Primärwindung erzeugte Ausgangspuls hatte. Zusammenfassend fließt nach einem ersten Ausgangspuls ein Freilaufstrom und dann wird ein zweiter Ausgangspuls erzeugt und durch den Ausgangsschaltkreis in die gleiche Polrichtung wie der erste Ausgangspuls gebracht. Diesem zweiten Puls folgt ein Freilaufstromfluß. Diese Aufeinanderfolge von Ausgangspulsen wird in einer gewünschten Anzahl wiederholt, um den gewünschten Stromfluß in einer vorgegebenen Richtung an den Ausgangsklemmen der Stromversorgung aufrechtzuerhalten.

Unter Verwendung bekannter oder Standard-Transformatortechniken würde ein solcher Ausgangsschaltkreis Freilaufdioden benötigen, um eine Sättigung des Transformatorkernes zu verhindern und um eine Überlagerung bei der Erzeugung nachfolgender Ausgangsstrompulse zu reduzieren.

In der Vergangenheit wurde für einen Transformator, der zur Verwendung in einem Ausgangsschaltkreis eines oben näher beschriebenen Wechselrichters ausgelegt wurde, allgemeine Standard-Transformatortechnologie angewendet, bei der ein Kern aus hoch-durchlässigem magnetischem Material mit individuellen Primärwicklungen und Ausgangswicklungen bewickelt wurde. Infolge dessen mußten die Schaltvorrichtungen welche das Wandlernetz auf der Eingangsseite des Transformators bildeten, wesentlich höhere Spannungs- und Stromcharacteristika haben, um reflektierten Übergangszuständen zu widerstehen. Diese Erhöhung der Kapazität der Schaltvorrichtungen, die Kosten der Freilaufdioden und zugehörigen Teile, die mit der Anwendung der Standard-Transformatortechnologie auf den Ausgangstransformator eines Inverter-Schaltkreises zum Lichtbogenschweißen einhergehen, erhöhen beträchtlich die Gesamtkosten und die Wartungsprobleme, die mit solchen Stromversorgungen verbunden sind.

Aufgabe der Erfindung ist es, den Ausgangsschaltkreis eines Inverters oder Wechselrichters derjenigen Art zu verbessern, die für den Betrieb einer elektrischen Lichtbogen-Schweißvorrichtung verwendet wird, wobei die Schwierigkeiten überwunden werden sollen, die bei Verwendung der Standard-Transformatortechnologie auftreten, wenn der Ausgangsschaltkreis eines solchen Wechselrichters zu entwerfen ist.

Diese Aufgabe wird mit den in den Ansprüchen angegebenen Merkmalen gelöst.

Mit der Erfindung wird der Ausgangsschaltkreis des Strom wechselrichters verbessert und ein neuer Ausgangstransformator geschaffen, der die Übergangszustände, denen die Inverter-Schaltvorrichtungen unterworfen sind, ebenso reduziert wie die Kosten, die mit der Notwendigkeit verbunden sind, Freilaufdioden im Ausgangskreis vorzusehen. Diese und andere Vorteile werden durch eine besondere Konstruktion des Ausgangstransformators erreicht, der bei einem Inverter-Schaltkreis der oben näher beschriebenen Art verwendet werden soll.

Nach der Erfindung wird ein Wechselrichter zur Stromversorgung verbessert, der einen Ausgangstransformator mit einem Magnet-Kern von hoher Permeabilität und eine Eingangsvorrichtung zum Zuführen eines Eingangsstrompulses zu dem Kern aufweist, wobei die Eingangsvorrichtung eine Eingangswicklung hat, welche den kern umgibt. Auf den Kern ist eine erste Ausgangwicklung und eine zweite Ausgangswicklung gewickelt. Zu dieser Energieversorgung gehören ferner erste und zweite Ausgangsklemmen, ein erster Ausgangsschaltkreis, der die zweite Ausgangswicklung des Transformators mit den gleichen Klemmen parallel schaltet, eine Einwegvorrichtung in dem ersten Ausgangsschaltkreis, welche dem Stromfluß gestattet, aus der ersten Ausgangswicklung in einer ersten Polrichtung über die Klemmen zu fließen, eine Einwegvorrichtung in dem zweiten Ausgangsschaltkreis, welche einen Stromfluß aus der zweiten Ausgangswicklung in der gleichen ersten Polrichtung über die Klemmen fließen läßt, einen Induktor oder eine Drosselspule, die mit den Ausgangsklemmen elektrisch in Reihe geschaltet werden kann und Mittel zum Anschließen der Klemmen an den Lastausgang, vorzugsweise an Schweißelektroden. Die Drossel hält den Lichtbogen zwischen den Strompulsen, indem sie einen rapiden Stromabfall nach jedem Ausgangspuls verhindert. Der Strom wird durch Verändern der Eingangspulsbreite eingestellt. Aus diesem Grunde haben die Ausgangspulse bei geringem Strom einen beträchtlichen Abstand voneinander. Dieser Abstand ist immer kleiner als die Hälfte der Periode der Schaltfrequenz, die bei der bevorzugten Ausführungsform 25 Millisekunden beträgt.

Die Verbesserung bei dieser Art von Inverter liegt im Ausgangsschaltkreis, wo die ersten und zweiten Ausgangswicklungen im wesentlichen die gleiche Wicklungszahl haben und in gleicher Richtung derart auf den Kern gewickelt sind, daß der Freilaufstrom von dem den Strom haltenden Induktor durch die Ausgangswicklungen in einer Richtung fließt, die im Kern Magnetflüsse mit entgegengesetzt gerichteter Polarität erzeugen. Würde man die Standard-Transformatortechnologie anwenden, würde jede der Ausgangswicklungen des Transformators die gleiche Zahl von Wicklungen haben. Die Wicklungsrichtung um den Kern würde entgegengesetzt sein, so daß der Freilaufstrom die Neigung haben würde, den Kern in einer Richtung, d.h. in einem Quadranten der Magnetisierkurve zu sättigen. Aus diesem Grunde waren bisher Freilaufdioden erforderlich, um einen Stromfluß in der Transformator-Sekundarstufe während der Freilaufperiode zu verhindern. Diese Dioden kehrten den Freilaufstrom so um, daß er nicht in die Ausgangswicklungen floß.

Nach der Erfindung sind die beiden Ausgangswicklungen des Transformators nahe beieinanderliegend zusammen auf den Kern mit einem Kopplungskoeffizienten gewickelt, der > 0,980 und vorzugsweise > 0,990 ist. Wird die richtige, entgegengesetzte Wickelrichtung und eine enge Kupplung eingehalten, hat der Freilaufstrom die Neigung, durch beide Ausgangswicklungen gleichzeitig zu fließen. Die Ausgangswicklungen wirken, während der Freilaufstrom fließt, als miteinander verbundene Stromtransformatoren. Diese wechselseitige Transformatoraktion oder Umformung gleicht den Stromfluß durch die beiden Ausgangswicklungen des Transformators soweit aus, daß eine Sättigung oder bemerkenswerte Magnetisierung des Kernes in jedem Quadranten der Magnetisierungskurve verhindert wird, während der Freilaufstrom in beiden Ausgangswicklungen fließt.

Nach einem weiteren Merkmal der Erfindung wird jede der Ausgangs- oder Sekundärwicklungen des Ausgangstransformators in zwei in Reihe geschaltete Spulenteile unterteilt, die auf einander gegenüberliegende Schenkel des Transformatorkernes gewickelt sind, wobei ein Spulenteil der ersten Ausgangswicklung über einem Spulenteil der zweiten Ausgangswicklung auf dem einen Schenkel und der andere Spulenteil der ersten Ausgangswicklung unter dem Spulenteil der zweiten Ausgangswicklung auf dem zweiten Schenkel angeordnet ist. Dieses Wicklungsschema verbessert die wechselseitige Kopplung und, wenn sie mit dem hohen Kopplungskoeffizienten verbunden wird, der durch das Aufeinanderwickeln der Spulenteile entsteht, gewährleistet es, daß der Freilaufstrom in einer Ausgangswicklung einen gleichen Stromfluß in der anderen Ausgangswicklung induziert. Die Ausgangswicklung wirkt hierbei als Stromtransformator mit einem Umwandlungsverhältnis von 1:1. Infolge dessen wird während der Freilaufphase zwischen den Ausgangspulsen der Freilaufstrom gleichmäßig auf die beiden Ausgangswicklungen aufgeteilt.

Da die Ausgangswicklungen in gleicher Richtung gewickelt sind, erzeugt der Freilaufstrom in jeder Ausgangswicklung einen entgegengesetzt gerichteten Magnetfluß. Dieser gegensätzliche Magnetfluß hat eine Größe, die auf der gleichen Anzahl von Windungen und dem gleichen Stromfluß in beiden Wicklungen basiert. Daher wird der induzierte Magnetfluß im wesentlichen ausgelöscht. Der Kern wird durch den Freilaufstrom nicht in bemerkenswertem Ausmaß magnetisiert.

Nach einem weiteren Merkmal der Erfindung hat der Eingangsteil des Transformators zwei abwechselnd gepulste Primärwicklungen, von denen eine der ersten Ausgangswicklung und die andere der zweiten Ausgangswicklung zugeordnet ist. Jede Primärwindung des Transformators ist in einer Richtung unmittelbar über und dann unter die schichtweise dicht gekoppelten Spulenteile der Sekundär-Ausgangswicklungen gewickelt, so daß der erste Spulenteil der ersten Primärwicklung direkt über einem zugeordnetem ersten Spulenteil der ersten Ausgangswicklung und der zweite Spulenteil der ersten Primärwicklung unmittelbar unter dem zweiten Spulenteil der ersten Ausgangswicklung angeordnet ist. Die zweite Eingangswicklung des Transformators ist in ähnlicher Weise auf dem Kern des Transformators angeordnet. Infolge dessen hat der Transformatorkern zwei separate Schenkel, von denen jeder einen Spulenteil der ersten Primärwicklung, einen Spulenteil der zweiten Primärwicklung, einen Spulenteil der ersten Ausgangswicklung und einen Spulenteil der zweiten Ausgangswicklung aufweist, wobei die Spulenteile der beiden Ausgangswicklungen sich in der Mitte befinden und direkt miteinander gekoppelt sind. Der Kopplungskoeffizient zwischen den Spulenteilen der Ausgangswicklungen ist > 0,980.

Die Spulenteile der Primärwicklungen sind direkt über oder unter die geschichteten oder einander überlappenden Spulenteile der beiden Ausgangswicklungen mit Kopplungsfaktoren gewickelt, die auch > 0,980 und vorzugsweise > 0,990 sind. Dieses Wicklungsschema schafft einen kompakten Ausgangstransformator für eine Energieversorgung vom Wechselrichtertyp, bei der zwei Primärwicklungen und zwei Sekundärwicklungen auf in Reihe geschaltete Spulenteile verteilt sind, von denen ein Spulenteil den anderen Spulenteil gegenseitig überlappt. Diese überlappenden Spulenteile befinden sich auf jedem Schenkel des Kernes, der bei dem Ausgangstransformator verwendet wird.

Die Hauptaufgabe der vorliegenden Erfindung besteht darin, einen verbesserten Wandler für induktive Belastung, beispielsweise elektrisches Lichtbogenschweißen zu schaffen, der einen Ausgangstransformator mit zwei abwechselnd gepulsten Ausgangswicklungen verwendet, keine Freilaufdioden benötigt und dennoch Übergangszustände von hohem Niveau im Eingangsschaltkreis des Transformators verhindert. Hierbei haben die beiden auf dem Kern eines Ausgangstransformators dicht aufeinandergewickelten Ausgangswicklungen den Vorteil, daß der Freilaufstrom durch die beiden Ausgangswicklungen Magnetströme in entgegengesetzten Richtungen erzeugt und der Kopplungskoeffizient zwischen zwei Ausgangswicklungen genügend hoch ist, daß die Wicklungen gegenseitig als Stromtransformatoren mit einem Umwandlungsverhältnis von im wesentlichen 1:1 wirken.

Ferner kann der Transformator für eine Schweißbelastung verwendet werden, ohne daß spezielle Freilaufdioden erforderlich sind und ohne daß hohe Übergangszustände im Eingangsteil des Transformators auftreten.

Weitere Merkmale und Vorteile der Erfindung ergeben sich aus der nachfolgenden Beschreibung und den Zeichnungen, in denen eine bevorzugte Ausführungsform der Erfindung an einem Beispiel näher erläutert ist. Es zeigt:

Fig. 1 ein Schaltbild eines Inverter-Schaltkreises der Art, auf die sich die Erfindung bezieht, bei dem die bei der Erfindung verwendeten Wicklungsrichtungen durch Punkte und die früher verwendeten Dioden durch strichierte Linien angedeutet sind;

Fig. 2 ein schematisches Wicklungsbild der Spule, bei der das Wicklungsschema nach der Erfindung verwendet wurde;

Fig. 3 einen Querschnitt nach Linie 3-3 der Fig. 2 in vergrößertem Maßstab;

Fig. 4 einen Querschnitt nach Linie 4-4 der Fig. 2 in vergrößertem Maßstab;

Fig. 5 ein Schaltbild, welches die Wirkungsweise der Erfindung erläutert, wenn ein Eingangspuls durch eine der Primärwicklungen läuft;

Fig. 6 ein vereinfachtes Schaltbild, welches die Betriebscharakteristika nach dem Puls der Fig. 1 und 5 zeigt, wobei die Ausgangswicklungen in ihren erfindungsgemäßen Verhaltnissen zueinander dargestellt sind;

Fig. 7A bis 7C sind schematische Schaltbilder ähnlich der Fig. 6, welche die Theorie der Wirkungsweise der Erfindung darstellen und wie sich diese von der Standard-Technologie unterscheidet;

Fig. 8 und 9 stellen zusammengenommen ein Schaltbild und ein Pulsdiagramm dar, welche die Betriebscharakteristika der bevorzugten Ausführungsform der Erfindung wiedergeben.

In den Zeichnungen ist ein Inverter oder Wechselrichter I dargestellt, der eine Ausgangsstufe oder einen Ausgangsschaltkreis C mit einem Transformator T aufweist, welcher mit einem Kern D versehen ist. Ein Gleichrichter und -Filterkreis 10 ist an eine Dreiphasen- oder Einphasenstromversorgung angeschlossen, um einen im allgemeinen geregelten Gleichstrom an den Klemmen 12, 14 und 12a, 14a bereitzustellen. Diese Klemmen liefern für die Pulse eine geregelte Gleichspannung zum Transformator T. Ein erster Satz Schalter 20, 22 erlaubt es, einen durch Pfeil A gekennzeichneten Gleichstrompuls durch eine erste Eingangswicklung 30 zu leiten. In ähnlicher Weise gestattet ein zweiter Satz Schalter 24, 26, einen als Pfeil B gekennzeichneten Gleichstrompuls durch eine zweite Eingangswicklung 32 fließen zu lassen. In der Praxis sind diese Schalter 20 bis 26 Starkstrom-Feldeffekttransistoren, sogenannte "Power-FETS", die in bekannter Weise durch pulsbreitenmodulierte Steuerchips betätigt werden. Die Pulsbreite wird durch die Zeitdauer bestimmt, in der sich die Schalter des jeweiligen Schaltersatzes in einem den Strom durchleitenden Zustand befinden. Die Schalter 20 bis 26 können mit einer Schaltlogik über eine Steuerleitung in eine den Strom durchleitende oder in eine Sperrstellung gebracht werden, in der sie den Strom nicht durchleiten. Es besteht deshalb keine Notwendigkeit, begrenzt schwingende Wechselrichter einzusetzen, die Siliciumthyristoren, sogenannte "SCRs" verwenden, die durch den Energieversorgungsausgang kommutiert werden müssen.

Die Breite der Gleichstrompulse ist einstellbar, ihre Frequenz ist jedoch unveränderlich. Somit bleibt die Impedanz des Ausgangsschaltkreises gleich und es ist keine große Drosselspule für den Anschluß der Last erforderlich. Bei der bevorzugten Ausführungsform wird die Arbeitsfrequenz auf eine Frequenz festgelegt, die über dem Hörbereich, also ungefähr bei 20 kHz liegt. Im normalen Betrieb werden die Schalter 20, 22 zunächst leitend gemacht. Hierdurch fließt ein Gleichstrompuls durch die Wicklung 30, wie dies durch den Pfeil A angedeutet ist. Danach werden die Schalter 20 und 22 nichtleitend gemacht, d.h. gesperrt. Hierdurch wird der Puls A durch die Wicklung 30 beendet. Danach werden die Schalter 24, 26 leitend gemacht, um einen Gleichstrompuls durch die Wicklung 32 zu schicken, was durch den Pfeil B angedeutet ist. Anschließend werden dann die Schalter 24 und 26 wieder nichtleitend gemacht, d.h. gesperrt. Zwischen den Durchflußstellungen der Schalter des ersten und zweiten Schaltersatzes gibt es eine Freilaufperiode oder einen Freilaufzustand, in dem der Strom nur in der Ausgangsstufe des Transformators T zirkuliert. Der Freilauf liegt zwischen den Pulsen. Da die Pulse eine Frequenz von 20 kHz haben, findet Freilauf nur innerhalb eines engbegrenzten Zeitraumes statt. Jeder Zeitraum wird begrenzt durch die Pulsbreite in der Eingangsstufe des Transformators.

Der Inverter I kann mit einer niedrigen Spannung, beispielsweise einer Wechselstromspannung von 220 bis 230 V oder mit einer höheren Spannung, beispielsweise einer Wechselstromspannung von 440 bis 460 V betrieben werden. Im ersten Fall werden beide Klemmen 12 und 12a an den positiven Ausgang des Gleichrichters 10 angeschlossen, während die Klemmen 14 und 14a an den negativen Ausgang des Gleichrichters angeschlossen werden. Infolgedessen arbeiten die beiden Inverter-Abschnitte parallel und um 180° phasenverschoben. Der Hochspannungsbetrieb wird dadurch bewerkstelligt, daß die Klemmen 12a und 14 miteinander verbunden werden, so daß die beiden Inverter-Abschnitte in Reihe, aber um 180° zueinander phasenverschoben arbeiten. Der Strom fließt durch einen der Filterkondensatoren 16 bzw. 18. Diese Ausbildung einer Vorrichtung, wie sie zur Verwirklichung der vorliegenden Erfindung verwendet wird, wird zum Zwecke einer vollständigen Offenbarung hier beschrieben.

Die vorliegende Erfindung betrifft in erster Linie eine Verbesserung im Transformator T des Ausgangsteiles, in dem verschiedene Spulenteile der einzelnen Eingangs- und Ausgangswicklungen in einem neuen Wicklungsschema zusammengebaut sind.

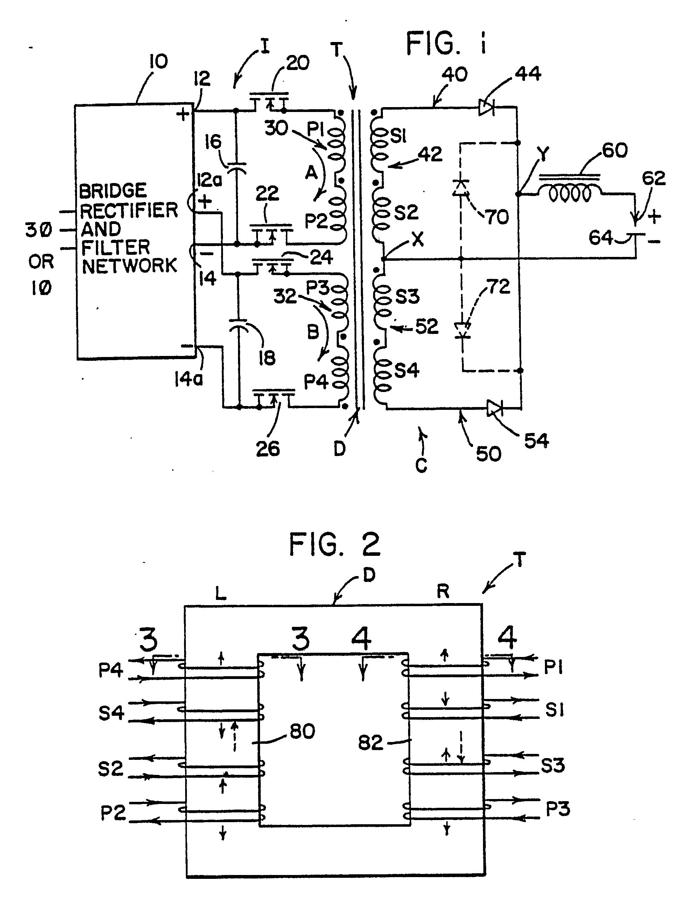

Nach der Erfindung werden die Wicklungen 30 bzw. 32 durch in Reihe geschaltete Spulenteile P1 und P2 bzw. P3 und P4 gebildet. Diese Spulenteile werden derart um den Transformatorkern D von hoher Permeabilität gewunden oder gewickelt, daß sie eine Polrichtung haben, wie sie durch die in Fig. 1 dargestellten Punkte angegeben ist. Die Spulenteile P1 und P2 bilden die Eingangswicklung 30, während in ähnlicher Weise die Spulenteile P3 und P4 in Reihe geschaltet sind und die Eingangswicklung 32 bilden. Der Strom, der von der Klemme 12 durch die Eingangswicklung 30 zur Klemme 14 fließt, erzeugt im Kern D einen Fluß, der einen Ausgangspuls mit einer ersten Polarität erzeugt. Ein Stromfluß durch die Eingangswicklung 32 zwischen den Klemmen 12a und 14a erzeugt im Kern D des Transformators T einen Fluß von entgegengesetzter Polarität. Hierdurch erzeugt im normalen Betrieb ein Strompuls A einen Ausgangspuls mit einer ersten Polarität, während ein Strompuls B einen Ausgangspuls für den Transformator mit entgegengesetzter Polarität erzeugt.

Der Transformator T hat einen ersten Ausgangsschaltkreis 40 mit einer ersten Ausgangswicklung 42 mit einer Einwegvorrichtung oder -Diode 44, welche den Strom zwischen den Ausgangsklemmen X und Y in einer ersten Richtung fließen läßt, wenn in der Wicklung 30 des Inverter-Eingangsteiles ein Puls erzeugt wird. Die Wicklungen 30 und 42 sind einander zugeordnet und in einer weiter unten noch näher beschriebenen Weise eng gekoppelt. Infolgedessen haben diese Wicklungen eine direkte Beziehung zur Erzeugung eines Stromausgangspulses, sobald ein Gleichstrompuls A die Windung 30 durchläuft.

Der zweite Ausgangsschaltkreis 50 weist eine zweite Ausgangswicklung 52 mit einer Einwegvorrichtung oder -Diode 54 auf. Dieser zweite Ausgangsschaltkreis ist ebenfalls an die Ausgangsklemmen X und Y derart angeschlossen, daß die Ausgangspulse in beiden Schaltkreisen 40 und 50 zu der induktiven Ausgangsbelastung geleitet werden, welche die Form einer elektrischen Lichtbogenschweißanlage hat, die einen Induktor oder eine Drossel 60 und Elektroden 62 und 64 aufweist, von denen die letztere beim Schweißen von dem Werkstück gebildet wird. Der Induktor 60 wird dazu verwendet, um zwischen den Ausgangsimpulsen, die von den Stromimpulsen A bzw. B in den Wicklungen 30 bzw. 32 erzeugt werden, einen Lichtbogen aufrechtzuerhalten. Da die Betriebsfrequenz 20 kHz beträgt, ist es nicht notwendig, zum Halten des Lichtbogens einen beträchtlichen Energiespeicher bereitzustellen.

Nach der Erfindung sind die Ausgangswicklungen 42 und 52 in parallelgeschaltete Spulenteile S1, S2, S3 und S4 unterteilt. Wie aus Fig. 1 hervorgeht, ist der Eingangsspulenteil P1 dem Ausgangsspulenteil S1 unmittelbar zugeordnet. In gleicher Weise hängen die Eingangsspulenteile P2, P3 und P4 unmittelbar mit den Ausgangsspulen oder Ausgangsspulenteilen S2, S3, S4 zusammen. Wie weiter unten noch erläutert werden wird, sind die einander zugeordneten Eingangs- und Ausgangsspulenteile übereinandergewickelt und liegen dicht aneinander.

Unter der Annahme, daß ein Wechselrichterbetrieb aufgenommen wurde, würden die Ausgangsschaltkreise 40 und 50 Dioden 70 und 72 benötigen, um den Freilaufstrom zwischen den Eingangspulsen vom Induktor 60 zwischen den Elektroden 62 und 64 fließen zu lassen. Bei Anwendung der Erfindung sind diese Dioden nicht erforderlich. Tatsächlich leisten sie auch keinen wesentlichen Beitrag zur Erhöhung des Freilaufstromes, wenn sie verwendet werden.

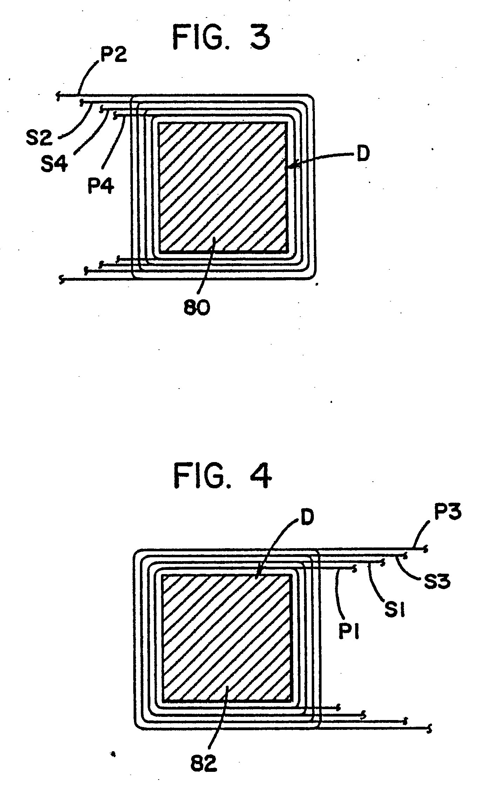

Der Transformator T ist nach dem in den Fig. 2 bis 4 gezeigten Wicklungsschema gewickelt. Der Kern D hat zwei im Abstand voneinander angeordnete Schenkel 80 und 82, die als Schenkel eines rechteckigen Kernes dargestellt sind und auf die Spulenteile in einer Richtung aufgewickelt sind, die durch die Pfeile in Fig. 2 und die Punkte in Fig. 1 angegeben ist. Das in Fig. 2 dargestellte Wicklungsschema zeigt einander überlappende, benachbarte Spulen, wie dies in den Fig. 3 und 4 zu sehen ist. Der Spulenteil P1 der Spule 30 ist unmittelbar unter dem Spulenteil S1 der Spule 42 gewickelt, wobei der Kopplungskoeffizient mindestens 0,980 beträgt und vorzugsweise größer als 0,990 ist. In gleicher Weise ist der Spulenteil S1 der Spule 42 unmittelbar unterhalb des Spulenteiles S3 der Spule 52 gewickelt, wobei der Kopplungskoeffizient in der gleichen Größenordnung liegt. Der letzte Spulenteil P3 der Spule 32 ist unmittelbar über den Spulenteil S3 der Spule 52 gewickelt. In gleicher Weise sind die Spulenteile P2, S2 und S4 und P4 auf dem im Abstand hierzu angeordneten Schenkel 80 von außen nach innen gewickelt.

Das dichte Aufeinanderliegen und das Abwechseln zwischen inneren und äußeren Teilen von Gruppen miteinander verbundener Spulenteile erzeugt zwischen einander zugeordneten Spulenteilen ein direktes Verhältnis von 1 : 1.

Während des Eingangs werden Pulse A, B, wie Gleichstromausgangspulse, in den Schaltkreisen 40 und 50 erzeugt, wie dies in Fig. 1 gezeigt ist. Ein Strompuls A läuft durch den inneren Spulenteil des Schenkels 82 und den äußeren Spulenteil des Schenkels 80. Unmittelbar neben diesen beiden Spulenteilen befinden sich die zugeordneten Ausgangsspulenteile S1 bzw. S2. Aus diesem Grund erzeugt der Gleichstrompuls A in der Spule 42 einen positiven Puls, der durch den Ausgangskreis 40 mit der Diode 44, durch die Drossel 60 und über die Elektroden 62 und 64 läuft. Der Gleichstrompuls B in der Wicklung 32 läuft durch die Spulenteile P3 und P4, die auf dem äußeren Spulenteil des Schenkels 82 und dem inneren Spulenteil des Schenkels 80 angeordnet sind, wie dies in den Fig. 2, 3 und 4 gezeigt ist. Die Lage der abwechselnd aufgewickelten Spulenteile zueinander ist am besten in den Fig. 3 und 4 zu erkennen. Hier sieht man, daß die Spulenteile S1 und S3 und die Spulenteile S4 und S2 schichtweise zwischen enggewickelten Spulenteilen der Primärwicklungen liegen. Diese Spulenteile sind direkt nebeneinander angeordnet und haben einen gegenseitigen Kopplungskoeffizienten, der größer als 0,980 und vorzugsweise größer als 0,990 ist.

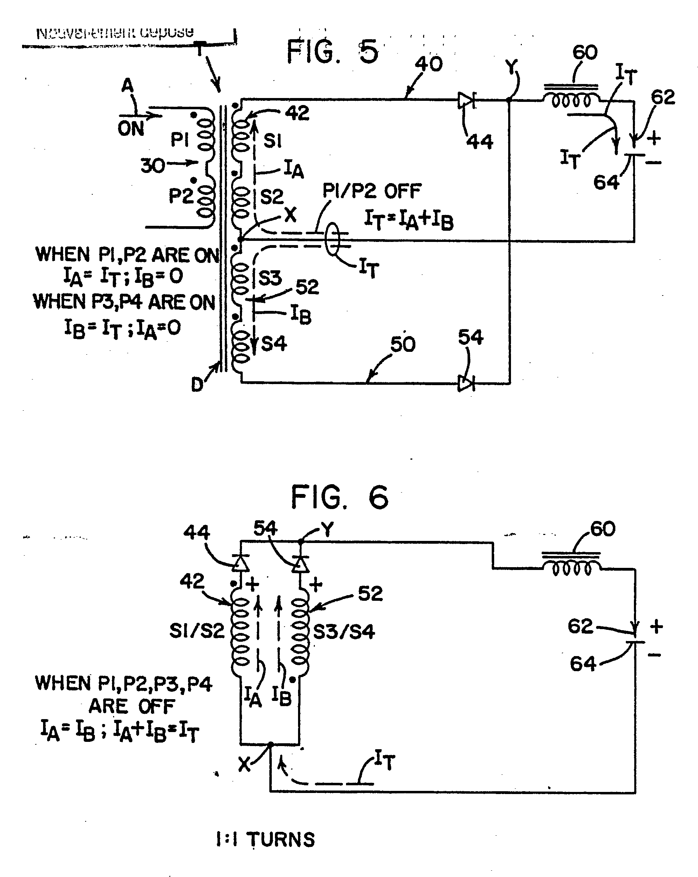

Das Schema der dicht angeordneten und miteinander abwechselnden Wicklungen ist ein Merkmal der Erfindung. Dieses Schema wird kombiniert mit dem neuen Konzept der Wickelrichtung der Wicklungen 42 und 52, um hierdurch gegenseitig auslöschende Magnetflüsse im Kern D zu erzeugen, wenn ein Freilaufstrom in entgegengesetzter Richtung durch die Wicklungen 42, 52 fließt. Dieses Konzept wird durch die Punkte in den Fig. 1 und 5 angedeutet.

Wie aus Fig. 5 hervorgeht, fließt während der Freilaufperiode nach einem Eingangspuls A ein Freilaufstrom, wie dies durch die gestrichelten Pfeile $I_A$, $I_B$ angedeutet ist. Der Strom $I_B$ in den Spulenteilen S3 und S4 erzeugt einen Kernfluß durch den Kern D in einer Richtung, die der Richtung des Flusses entgegengesetzt ist, der erzeugt wird, wenn die Wicklung 52 einen Freilaufstrom $I_A$ leitet. Nachdem somit ein Puls A einen Ausgangspuls in dem Ausgangskreis 40 erzeugt hat, fließt ein Strom $I_A$ im Ausgangskreis 40 und ein Strom $I_B$ in dem Ausgangskreis 50. Nachdem ein Ausgangspuls die Ausgangsleitung 50 durchlaufen hat, fließt ein Freilaufstrom auf dem gleichen Weg. Der Strom $I_A$ wird in der Wicklung 42 und ein Strom $I_B$ wird in der Wicklung 52 fließen. Dies wird durch die Wicklungen 42 und 52 einen entgegengesetzten Fluß erzeugen. Während der Freilaufphase hat der Magnetfluß, während er durch die Wicklungen 42, 52 Ströme erzeugt, immer eine entgegengesetzt gerichtete magnetische Polarität oder Dauer, so daß die Flüsse sich gegenseitig auslöschen und eine Sättigung des Kernes D während der Freilaufperiode verhindert wird. Dieses durch das Wicklungsschema erreichte neue Merkmal schafft einen wesentlich verbesserten Ausgangsschaltkreis für den Wandler I.

Die Arbeitscharakteristika der Erfindung sind in Fig. 5 dargestellt. Der Puls A erzeugt Strompulse im Schaltkreis 40. Die Wicklung 52 des Schaltkreises 50 ist entgegen der Durchflußrichtung der Diode 54 beaufschlagt. Während dieses Betriebszustandes, bei dem ein Gleichstrompuls A durch die in Reihe geschalteten Spulenteile P1 und P2 läuft, wird durch diese Spulenteile in den Ausgangsabschnitten S1 und S2 ein Ausgangsstrom induziert. Zu diesem Zeitpunkt ist der gesamte Ausgangsstrom $I_T$ der Gesamtstrom, der durch die Drosselspule 60 und über die Elektroden 62 und 64 fließt. Zu diesem Zeitpunkt versucht der Strompuls A den Ausgangsschaltkreis 50 in entgegengesetzter Richtung zu betreiben, was durch die Diode 54 verhindert wird. Infolgedessen ist dort kein Stromfluß $I_B$ vorhanden. Der Gesamtstrom $I_T$ ist gleich dem Strom $I_A$. Wenn der Strompuls A durch Sperren der Schalter 22 und 24 beendet wird, läßt der Induktor 60 den gesamten Strom $I_T$ entsprechend der in dem Induktor oder in der Drossel 60 gespeicherten Energie fließen. Da dort kein Eingangspuls zum Transformator T vorliegt, fließt der Strom durch beide Spulen 42 und 52, wie dies durch den Strom $I_A$ und $I_B$ ange zeigt ist. Dies ist die Freilaufphase.

Bei Anwendung der Erfindung sind die Ströme $I_A$, $I_B$ in diesen beiden Zweigen gleich. Da die Spulen 42 und 50 in gleicher Richtung gepolt sind, wie dies durch die Punkte angedeutet ist, fließen die Ströme $I_A$ und $I_B$ in entgegengesetzten Richtungen durch die in Reihe geschalteten Spulenteile der Windungen 42 und 52, wobei sie den Magnetfluß im Kern D auslöschen. Infolge hiervon hat der Kern D keine Neigung, sich während der Freilaufphase zu sättigen.

Obgleich dies in Fig. 5 nicht dargestellt ist, lassen die Spulenteile P3 und P4 den Strom $I_B$ passieren, wenn ein Gleichstrompuls B erzeugt wird, wie dies in Fig. 1 dargestellt ist. Dieser Strom $I_B$ ist ebenso groß wie der gesamte Laststrom $I_T$. Der Strom $I_A$ ist dann Null. Danach wiederholt sich die Freilaufphase, wenn alle Schalter 20 bis 26 wieder gesperrt sind. Dieser Zustand wird in Fig. 5 durch den gespaltenen Stromfluß $I_A$ und $I_B$ dargestellt.

In Fig. 6 ist die gleiche Anordnung dargestellt wie in Fig. 5, jedoch in einem Zustand, in dem alle Schalter 20 bis 26 nichtleitend, d.h. gesperrt sind. Zu diesem Zeitpunkt ist der Gesamtstrom $I_T$ gleich der Summe der Ströme $I_A$ plus $I_B$. Wenn der Transformator T nach der Erfindung konstruiert ist, läuft der Strom $I_B$ durch die Spulenteile S3, S4 in einer Richtung, in der er an dem mit Punkt versehenen Ende in die Spulenteile eintritt. Der Strom $I_B$ läßt die Windung 52 als Primärwicklung eines Stromtransformators wirken, wobei er in den dicht mit ihnen verbundenen Spulenteilen S1, S2 einen Strom induziert. In gleicher Weise induziert der in der Windung 42 laufende Strom $I_A$ einen Strom in der Wicklung 52. Nach der Erfindung haben die durch diese beiden Ströme $I_A$ und $I_B$ im Kern erzeugten Magnetflüsse entgegengesetzte Richtungen. Der Strom $I_B$ tritt in das mit Punkt versehene Ende der Wicklung 52 ein und der Strom $I_A$ ver läßt das mit Punkt versehene Ende der Windung 42, wie dies durch die Punkte in Fig. 6 angedeutet ist. Wie weiter unten näher erläutert werden wird, zwingt die dichte Kupplung der Windungen 42 und 52 die beiden Ströme $I_A$ und $I_B$ während der Freilaufphase gleich zu sein. Infolgedessen sind die in entgegengesetzten Richtungen im Kern D erzeugten Magnetflüsse gleich und entgegengesetzt gerichtet und löschen deshalb einander aus. Während der Freilaufphase ist der Stromfluß in beiden Ausgangsschaltkreisen 40 und 50, die die gleiche Anzahl von Wicklungen 42 und 52 haben, ausgeglichen. Infolgedessen sättigt sich der Kern auch dann nicht, wenn die in Fig. 1 dargestellten Dioden 70 und 72 nicht verwendet werden.

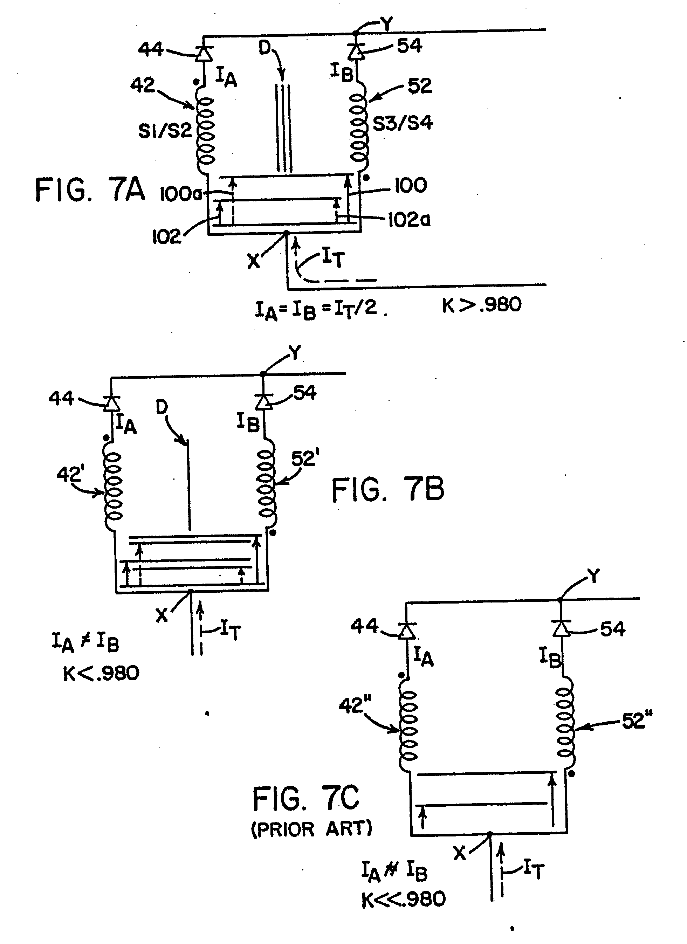

Die Erfindung wird in dem schematischen Diagramm der Fig. 7A näher erläutert.

Die Wicklungen 42 und 52 sind mit einem Kopplungskoeffizienten größer als 0,980 dicht eine über die andere gewickelt. Während der Freilaufphase, dem Freilaufzustand oder der Freilaufperiode läuft der gesamte Strom $I_T$ in die Klemme X. Da der Stromfluß sich nicht automatisch gleichmäßig verteilt, hat ein größerer Teil die Neigung, durch eine der Ausgangswicklungen 42 oder 52 zu fließen. Dieser ungleich verteilte natürliche Stromfluß wird schematisch durch zwei Pfeile in ausgezogenen Linien dargestellt, die zur Erläuterung unterschiedliche Höhen haben, um einen Unterschied in der Stärke des Stromes anzudeuten. Infolge der dichten Kopplung der Wicklungen 42 und 52 wirken diese Wicklungen gegenseitig als Transformatoren. Die induzierten Stromflüsse in den Windungen sind durch gestrichelte Pfeile angedeutet, deren Höhe ein Maß für ihre Größe zueinander ist. Man erkennt, daß ein großer Stromfluß 100, der die Wicklung 52 durchläuft, einen entsprechend großen Stromfluß 100a in der Wicklung 42 induziert. Ein verhältnismäßig kleinerer natür licher Stromfluß 102 in der Windung 42 induziert einen entsprechend niedrigeren Stromfluß 102a in der Windung 52. Infolge der dichten Kupplung, die durch die drei Linien des Kernes D in Fig. 7A angedeutet ist, findet eine Gleichstromtransformation statt, so daß der Strom $I_A$ gleich der Summe der Stromflüsse 100a plus 102 ist. In gleicher Weise entspricht der Stromfluß $I_B$ in der Wicklung 52 der Summe der Ströme 100 plus 102a. Da der Stromfluß 100 gleich dem Stromfluß 100a und der Stromfluß 102 gleich dem Stromfluß 102a ist, macht die Stromumformung die Stromflüsse $I_A$ und $I_B$ einander gleich. Die Summe dieser beiden Ströme $I_A$ und $I_B$ wiederum ist gleich dem Gesamtstromfluß $I_T$. Auf diese Weise werden die Ströme $I_A$ und $I_B$ in den Wicklungen 42 bzw. 52 durch die Stromumformwirkung der Wicklungen 42 und 52 während der Freilaufperiode einander gleich. Aus diesem Grunde sind die in Fig. 1 dargestellten Dioden 70 und 72 unnötig. Da außerdem die Wicklungen 42 und 52 die gleiche Wicklungspolarität haben, fließt der eine Strom in das mit Punkt versehene Ende der Wicklung 52 und der andere Strom fließt aus dem mit Punkt versehenen Ende der Wicklung 42 aus, wenn durch diese beiden Wicklungen 42 und 52 gleichzeitig Strom fließt. Dies erzeugt einen entgegengesetzt gerichteten Magnetfluß im Kern D, welcher zur Auslöschung führt und eine Sättigung des Kernes während der Freilaufphase verhindert.

In Fig. 7B haben die Wicklungen einen geringeren Kupplungskoeffizienten. Dies wird durch nur eine Linie für den Kern D angedeutet, der zwischen den Wicklungen 42' und 52' dargestellt ist. In diesem Fall hat die Umformung zwischen den Wicklungen 42 und 52 nicht ein Verhältnis von 1 : 1. Hierdurch erzeugt der durch die ausgezogene Pfeillinie dargestellte, natürlich auftretende Stromfluß einen kleineren induzierten Stromfluß in der gegenüberliegenden Spule, wie dies durch den Pfeil in strichierten Linien dargestellt ist.

Die Summe des durch die Pfeile in ausgezogenen und strichierten Linien dargestellten Stromflusses ist deshalb zwischen dem Strom $1_A$ und dem Strom $1_B$ nicht ausgeglichen. Bei dem in Fig. 7C schematisch dargestellten Stand der Technik sind die zwei Ausgangswicklungen 42 und 52 nicht übereinandergewickelt, um eine Stromumformung auszulösen. Die Wicklungen 42" und 52" befinden sich natürlich auf dem gleichen Transformatorkern D. Bei dieser Transformatorausbildung nach dem Stande der Technik ist der Stromfluß durch die beiden Ausgangswicklungen vollständig unausgeglichen. Die in Fig. 1 dargestellten Dioden 70 und 72 sind deshalb hier notwendig. Außerdem kann sich der Kern während der Freilaufphase der Wechselrichtung sättigen, da die algebraische Summe des Magnetflusses erheblich ist, während der Freilaufstrom fließt.

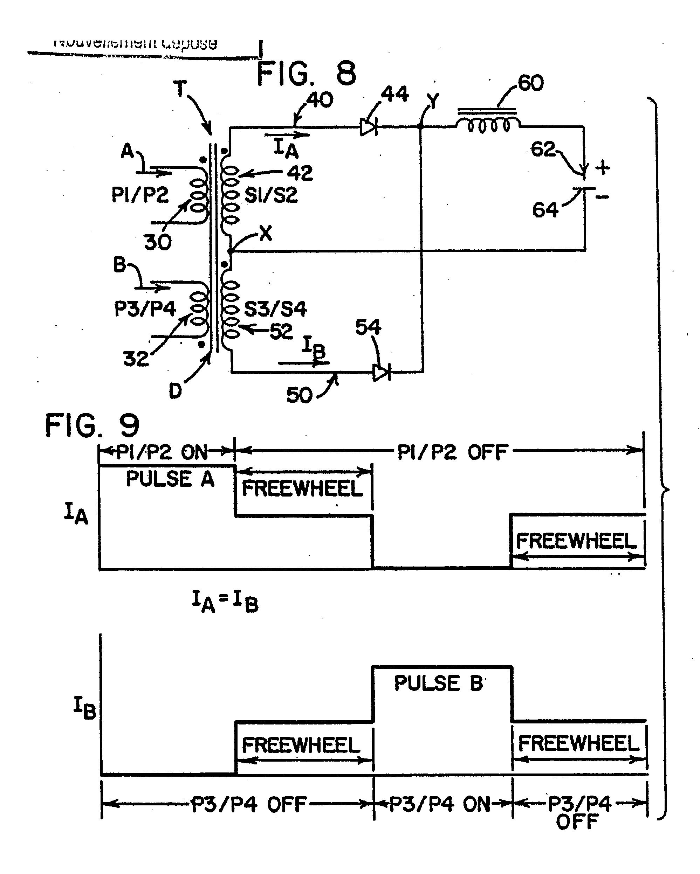

Die Fig. 8 und 9 fassen die Erfindung zusammen. Wenn sich die Schalter 20 und 22 in ihrer leitenden Stellung befinden, wird ein Puls A durch die Spulenteile P1/P2 geleitet. Dies erzeugt im Schaltkreis 40 einen hohen Strom $I_A$. In dem Schaltkreis 50 fließt kein Strom. Wenn die Schalter 20 und 22 nichtleitend gemacht, also gesperrt werden, tritt der Ausgangsschaltkreis in seine Freilaufphase ein. Zu diesem Zeitpunkt wird der Strom $I_A$ gleich dem Strom $I_B$. Dann werden die Schalter 24 und 26 stromleitend gemacht und in den Wicklungsteilen P3 und P4 ein Eingangsstrompuls B erzeugt. Zu dieser Zeit tritt in dem Schaltkreis 40 kein Stromfluß auf und der gesamte Stromfluß läuft durch den Schaltkreis 50. Wenn die Schalter 24 und 26 danach wieder gesperrt werden, tritt der Schaltkreis in seine nächste Freilaufphase ein. In diesem Zeitpunkt werden dank der Erfindung die Ströme $I_A$ und $I_B$ im wesentlichen gleich. Hierbei fließen die Ströme $I_A$ und $I_B$ in bezug auf den Kern D in entgegengesetzten Richtungen, wodurch dieser keine wesentliche Neigung zeigt sich zu sättigen oder teilweise zu magnetisieren.

Die Erfindung wurde so beschrieben, als hätte sie einen Kopplungsfaktor oder Kopplungskoeffizienten von 1,0. In Wirklichkeit übersteigt die dichte Kupplung bei der Erfindung 0,950 und beträgt bei der bevorzugten Ausführungsform 0,989. Ein solcher Kopplungskoeffizient sollte größer sein als 0,980 und vorzugsweise größer als 0,990. Ein Kopplungskoeefizient zwischen den Wicklungen 42 und 52, der 0,950 überschreitet, reicht jedoch schon aus, um die Vorzüge der Erfindung wirksam werden zu lassen.

Die Wicklungen 42 und 52 wirken als Stromtransformatoren, wobei die eine die Primärwicklung und die andere die Sekundärwicklung darstellt. Da die Ströme in entgegengesetzten Richtungen fließen, gibt es keine Tendenz für den Kern, sich während der Freilaufphase zu sättigen oder teilweise zu magnetisieren. Hierdurch kann die Größe der Schalter verringert werden und es sind keine Dioden 70, 72 erforderlich. Durch abwechselndes Aufwickeln der Primärwindungen 30, 32 auf einander gegenüberliegenden Seiten der schichtweise aufgebauten Spulenteile der Wicklungen 42 und 52 wird eine kompakte Transformatorwindung geschaffen mit enger Wicklung und einer ausgeglichenen Magnetflußwirkung, die dadurch hervorgerufen wird, daß sich ein Spulenteil auf der Außenseite und der andere Spulenteil auf der Innenseite befindet und die Spulenteile elektrisch in Reihe geschaltet sind.

**Ansprüche**

1. Vorrichtung zur Stromversorgung mit einem Wechselrichter (I), der einen Ausgangstransformator (C) mit hochpermeablem magnetischem Kern (D) aufweist, mit folgenden Merkmalen:

a) Eingangseinrichtungen zum Zuführen von Eingangsstrompulsen zum Kern (D), wobei die Eingangseinrichtungen Eingangswicklungen (30,32) aufweisen, die den Kern (D) umschließen;

b) eine erste Ausgangswicklung (42), die auf den Kern (D) gewickelt ist;

c) eine zweite Ausgangswicklung (52), die auf den Kern (D) gewickelt ist;

d) erste und zweite Ausgangsklemmen (X bzw. Y);

e) einen ersten Ausgangsschaltkreis (40), mit dem die erste Ausgangswicklung (42) des Transformators (T) mit den Ausgangsklemmen (X,Y) parallel geschaltet wird;

f) einen zweiten Ausgangsschaltkreis (50), mit dem die zweite Ausgangswicklung (52) des Transformators (T) mit den Ausgangsklemmen (X,Y) parallel geschaltet wird;

g) eine Einwegvorrichtung (44) in dem ersten Schaltkreis (40), die es erlaubt, einen Strom von der ersten Ausgangswicklung (42) über die Klemmen (X,Y) in einer ersten Polrichtung fließen zu lassen;

h) eine Einwegvorrichtung (54) in dem zweiten Ausgangsschaltkreis (50), die es erlaubt, Strom von der zweiten Ausgangswicklung (52) über die Klemmen (X,Y) in der ersten Polrichtung fließen zu lassen;

i) einen Induktor (60), der mit den Klemmen (X,Y) in Reihe schaltbar ist;

j) Vorrichtungen zum Anschließen der Klemmen (X,Y) an einen Lastausgang;
dadurch gekennzeichnet,

k) daß die erste und zweite Ausgangswicklung (42 bzw. 52) im wesentlichen die gleiche Anzahl von Wicklungen aufweisen und in der gleichen flußerzeugenden Richtung auf den Kern (D) gewickelt sind, wobei nach Zuführen eines Eingangsstrompulses zu der Eingangswicklung ein Freilaufstrom von dem Induktor (60) durch die erste und zweite Ausgangswicklung (42 bzw. 52) in einer Richtung fließt, die in dem Kern (D) einen Magnetfluß mit gegensätzlicher Polarität hervorruft und

l) daß die ersten und zweiten Ausgangswicklungen (42 bzw. 52) so dicht neben- bzw. aufeinander auf dem Kern (D) angebracht sind, daß sich ein Kupplungskoeffizient ergibt, der größer als 0,980 ist.

2. Vorrichtung zur Stromversorgung mit einem Wechselrichter (I), der einen Ausgangstransformator mit einem hochpermeablen magnetischen Kern (D) aufweist, mit folgenden Merkmalen:

a) Eingangseinrichtungen zum Zuführen von Eingangsstrompulsen zum Kern (D), wobei die Eingangsvorrichtungen erste und zweite Eingangswicklungen (30, 32) aufweisen, die den Kern (D) umschließen;

b) eine erste Ausgangswicklung (42), die auf den Kern (D) gewickelt und der ersten Eingangswicklung (30) zugeordnet ist;

c) eine zweite Ausgangswicklung (52), die auf den Kern (D) gewickelt und der zweiten Ausgangswicklung (32) zugeordnet ist;

d) erste und zweite Ausgangsklemmen (X,Y);

e) einen ersten Ausgangsschaltkreis (40), mit dem die erste Ausgangswicklung (42) des Transformators zu den Klemmen (X,Y) parallel geschaltet wird;

f) einen zweiten Ausgangsschaltkreis (50), mit dem die zweite Ausgangswicklung (52) des Transformators (T) mit den Ausgangsklemmen (X,Y) parallel geschaltet wird;

g) eine Einwegvorrichtung (44) in dem ersten Ausgangsschaltkreis (40), die es erlaubt, einen Strom von der ersten Ausgangswicklung (42) über die Klemmen (X,Y) in einer ersten Polrichtung fließen zu lassen;

h) eine Einwegvorrichtung (54) in dem zweiten Ausgangsschaltkreis (50), der es erlaubt, Strom von der zweiten Ausgangswicklung (52) über die Klemmen (X,Y) in der ersten Polrichtung fließen zu lassen;

i) einen Induktor (60), der mit den Klemmen (X,Y) in Reihe schaltbar ist;

j) Vorrichtungen zum Anschließen der Klemmen (X,Y) an ein Paar Schweißelektroden,
dadurch gekennzeichnet,

k) daß die erste und zweite Ausgangswicklung (42 bzw. 52) im wesentlichen die gleiche Anzahl von Wicklungen aufweisen und in der gleichen flußerzeugenden Richtung auf den Kern (D) gewickelt sind, wobei nach Zuführen der Eingangsstrompulse zu jeder Eingangswicklung ein Freilaufstrom von dem Induktor (60) durch die Ausgangswicklungen in einer Richtung fließt, daß im Kern (D) Magnetflüsse mit entgegengesetzter Polarität erzeugt werden und

l) daß die ersten und zweiten Ausgangswicklungen (42, 52) mit einem Kupplungskoeffizienten > 0,950 dicht neben-bzw. aufeinander angeordnet sind.

3. Vorrichtung zur Stromversorgung mit einem Ausgangstransformator zur Umwandlung von Eingangspulsen in eine Serie von Ausgangspulsen, die bei einem Schweißvorgang verwendet werden, wobei der Transformator einen Kern (D) mit zwei Schenkeln aufweist und erste und zweite Primärwicklungen (30 bzw. 32) hat, durch welche Gleichstromeingangpulse fließen, um den Kern abwechselnd in entgegengesetzten Richtungen zu magnetisieren, wobei die Eingangpulse während einer Periode im Abstand voneinander zugeführt werden, während welcher beim Schweißvorgang ein Freilaufstrom fließt und wobei der Transformator eine erste Ausgangssekundärwindung aufweist, in der ein erster von den erwähnten Ausgangsstrompulsen induziert wird, wenn ein Eingangsstrompuls in der genannten ersten Primärwicklung (30) fließt und wobei der Transformator eine zweite Ausgangssekundärwicklung (52) aufweist, in der ein zweiter von den genannten Strompulsen induziert wird, wenn in der genannten zweiten Primärwindung ein Eingangsstrompuls fließt, wobei die ersten und zweiten Ausgangspulse entgegengesetzte Polarität haben, **dadurch gekennzeichnet**, daß die ersten und zweiten Ausgangswicklungen (42, 52) auf dem Kern mit einem Kopplungskoeffizienten von mindestens 0,950 unmittelbar übereinander und in einer Richtung gewickelt sind, daß während der Freilaufstromperioden entgegengesetzt gerichtete Magnetisierungen auftreten.

4. Bei einer Vorrichtung zur Stromversorgung mit einem Ausgangstransformator zum Zuführen von Strom in einer vorgegebenen Richtung zu den Elektroden (62, 64) beim Lichtbogenschweißen die Verwendung von zwei abwechselnd gepulsten Ausgangsschaltkreisen (40, 50), von denen jeder eine Ausgangswicklung (42,52) mit einer vorgegebenen Anzahl von Wicklungen und eine Einwegeinrichtung (44, 54) aufweist, wobei die Ausgangswicklung einen hochpermeablen Magnetkern umgibt, **dadurch gekennzeichnet**, daß die Ausgangswicklungen (42, 52) auf dem Kern (D) in einer Richtung aufgewickelt sind, die im Kern zwischen den Pulsen der Ausgangsschaltkreise entgegengesetzt gerichtete Magnetflüsse erzeugen und daß die Ausgangswindungen mit einem Kopplungskoeffizienten zwischen den Ausgangswicklungen von wenigstens 0,980 direkt übereinander gewickelt sind.

5. Vorrichtung nach einem der Ansprüche 1 bis 4, **dadurch gekennzeichnet**, daß die erste Ausgangswicklung (42) erste und zweite in Reihe geschaltete Spulenteile (S1 bzw. S2) aufweist und das die zweite Ausgangswicklung (52) erste und zweite in Reihe geschaltete Spulenteile (S3 bzw. S4) aufweist und daß der erste Spulenteil (S1) der ersten Ausgangswicklung (42) direkt über den ersten Spulenteil (S3) der zweiten Ausgangswicklung (52) gewickelt ist und daß der zweite Spulenteil (S4) der zweiten Ausgangswicklung (52) unmittelbar über den zweiten Spulenteil (S2) der ersten Ausgangswicklung (42) gewickelt ist.

6. Vorrichtung nach einem der Ansprüche 1 bis 5, **dadurch gekennzeichnet**, daß der Kern (D) erste und zweite im Abstand voneinander angeordnete Schenkel aufweist und daß die Spulenteile (P1, P3) und (S1, S3) auf dem einen Schenkel und die Spulenteile (P2, P4) und (S2, S4) auf dem anderen Schenkel angeordnet sind.

7. Vorrichtung nach einem der Ansprüche 1 bis 6, **dadurch gekennzeichnet**, daß die Primärwicklungen (30, 32) erste und zweite, in Reihe geschaltete Spulenteile (P1 und P2 bzw. P3 und P4) aufweisen und daß auf dem ersten Schenkel des Kernes (D) der erste Spulenteil (P1) der ersten Primärwicklung (30), der erste Spulenteil (S1) der ersten Ausgangswicklung (42), der erste Spulenteil (S3) der zweiten Ausgangswicklung (52) und der erste Spulenteil (P3) der zweiten primärwicklung (32) aufeinander folgend angeordnet sind, wobei jeweils benachbarte Spulenteile einen Kopplungskoeffizienten haben, der größer als 0,980 ist.

8. Vorrichtung nach einem der Ansprüche 1 bis 7, **dadurch gekennzeichnet**, daß auf dem zweiten Schenkel des Kernes (D) der zweite Spulenteil (P4) der zweiten Primärwicklung (32), der zweite Teil (S4) der zweiten Ausgangswicklung (52), der zweite Spulenteil (S2) der ersten Ausgangswicklung (42), der zweite Spulenteil (P2) der ersten Primärwicklung (30) aufeinander folgend angeordnet sind und daß die jeweils benachbarten Spulenteile einen Kopplungskoeffizienten haben, der größer als 0,980 ist.

9. Vorrichtung nach einem der Ansprüche 1 bis 8, **dadurch gekennzeichnet**, daß der Kopplungskoeffizient größer als 0,980 ist.

10. Vorrichtung nach einem der Ansprüche 1 bis 9, **dadurch gekennzeichnet**, daß der Kopplungskoeffizient $\geq$ 0,990 ist.

FIG. 1

FIG. 2

# FIG. 3

# FIG. 4

# FIG. 5

WHEN P1,P2 ARE ON
$I_A = I_T$; $I_B = 0$
WHEN P3,P4 ARE ON
$I_B = I_T$; $I_A = 0$

P1/P2 OFF
$I_T = I_A + I_B$

# FIG. 6

WHEN P1,P2,P3,P4
ARE OFF
$I_A = I_B$ ; $I_A + I_B = I_T$

1:1 TURNS

EP 0 396 126 A2

FIG. 7A

44 · · D · · 54
42 · I_A · I_B · 52
S1/S2 · S3/S4
100a · 100
102 · 102a
X · I_T

$I_A = I_B = I_T/2$ · $K > .980$

FIG. 7B

44 · · D · · 54
I_A · I_B
42' · 52'

X · I_T

$I_A \neq I_B$
$K < .980$

FIG. 7C
(PRIOR ART)

44 · · 54
I_A · I_B
42" · 52"

X · I_T

$I_A \neq I_B$
$K << .980$

Ln 527 EU

Nouvellement déposé

# FIG. 8

# FIG. 9

PI/P2 ON | PI/P2 OFF

PULSE A | FREEWHEEL

$I_A$

FREEWHEEL

$I_A = I_B$

$I_B$

FREEWHEEL | PULSE B | FREEWHEEL

P3/P4 OFF | P3/P4 ON | P3/P4 OFF